# EUROPÄISCHE PATENTSCHRIFT

(11) **EP 0 616 939 B1**
(45) Veröffentlichungstag und Bekanntmachung des Hinweises auf die Patenterteilung: **22.11.1995**
(21) Anmeldenummer: 94102550.4
(22) Anmeldetag: 21.02.1994
(51) Int. Cl.: B62D 53/08

(54) **Sattelkupplungsplatte**
Fifth wheel saddle plate
Plateau de sellette d'attirage

(30) Priorität: 26.03.1993 DE 4309977
(43) Veröffentlichungstag der Anmeldung: 28.09.1994
(73) Patentinhaber: JOST-WERKE AG, D-63263 Neu Isenburg (DE)
(72) Erfinder: Bergmann, Wolfgang, D-63768 Hösbach (DE)
(74) Vertreter: Köhler, Günter, Dipl.-Ing.

(56) Entgegenhaltungen:
- US-A- 3 704 924
- US-A- 4 121 853
- US-A- 5 165 714

## Beschreibung

Die Erfindung bezieht sich auf eine Sattelkupplungsplatte mit einem Einführungsschlitz für einen Zugsattelzapfen und einem in einer Abstufung des Einführungsschlitzes befestigten, etwa hufeisenförmigen Verschleißring aus relativ zum Zugsattelzapfen gleitfähigem Kunststoff, der radial nach innen über den Rand des Einführungsschlitzes vorsteht und dessen radial innere Kontur wenigstens teilweise halbkreisförmig ist.

Bei einer bekannten Sattelkupplungsplatte dieser Art (DE 37 41 330 A1) ist der Verschleißring mit Löchern zur Durchführung von Befestigungsschrauben versehen. Diese Art der Befestigung birgt die Gefahr in sich, daß der Kunststoff des Verschleißrings im Laufe der Zeit unter der Spannkraft der Spannschrauben wegfließt und sich die Schrauben lösen. Obwohl der Kunststoff des Verschleißrings gleitfähig ist, kann dennoch die durch den Zugsattelzapfen auf den Verschleißring ausgeübte, in der Richtung wechselnde Drehbelastung zu einem Ausschlagen der Löcher im Verschleißring führen.

Sodann ist eine ähnliche Sattelkupplungsplatte bekannt (EP 0 224 197 B1), bei der der Verschleißring im Querschnitt U-förmig ausgebildet ist und mit seinen Schenkeln den inneren Rand der Abstufung des Einführungsschlitzes übergreift und im Rand des oberen Schenkels mit etwa halbkreisförmigen Ausnehmungen versehen ist, in die Befestigungsschrauben mit ihrem Kopf eingreifen, um den Verschleißring gegen Drehung zu sichern. Der Verschleißring ist halbkreisförmig und wird bei der Montage unter Drehung auf den inneren Rand des Einführungsschlitzes geschoben. Danach werden die Schrauben eingeführt. Auch hierbei besteht die Gefahr, daß die Ausnehmungen aufgrund der Drehbewegungen des Sattelkupplungszapfens ausschlagen.

Der Erfindung liegt die Aufgabe zugrunde, eine Sattelkupplungsplatte der eingangs genannten Art anzugeben, bei der der Verschleißring geringeren Verformungen unterliegt.

Erfindungsgemäß ist diese Aufgabe dadurch gelöst, daß der Verschleißring mittels einer Halteplatte aus Metall, die den Verschleißring teilweise übergreift und radial außerhalb des Verschleißrings an der Sattelkupplungsplatte befestigt ist, in der Abstufung festgehalten ist und die radial äußere Kontur des Verschleißrings sowie die Kontur der an jener Kontur anliegenden Fläche der Abstufung exzentrisch in bezug auf den Mittelpunkt des Halbkreises der radial inneren Kontur des Verschleißrings sind.

Bei dieser Ausbildung unterliegt der Verschleißring nur einer geringen Flächenpressung durch die Halteplatte, und die Drehbelastung des Verschleißrings wird ebenfalls großflächig unter geringer Flächenpressung und demzufolge geringer Verformung von der radial äußeren Kontur des Verschleißrings auf die anliegende Fläche der Abstufung der Sattelkupplungsplatte übertragen.

Vorzugsweise sind die radial äußere Kontur des Verschleißrings und die Kontur der an jener anliegenden Fläche der Abstufung kreisbogenförmig. Solche Konturen lassen sich leicht herstellen und stellen eine große Berührungsfläche mit entsprechend geringer Flächenpressung sicher.

Die Halteplatte kann mittels Schrauben in der Abstufung befestigt sein. Sie kann daher gelöst werden, um den Verschleißring gegebenenfalls auszuwechseln.

Die Halteplatte ist vorzugsweise etwa hufeisenförmig. Auf diese Weise kann sie eine große Fläche des Verschleißrings unter geringstmöglicher Flächenpressung abdecken.

Vorzugsweise ist ferner dafür gesorgt, daß der Verschleißring einen axial nach oben vorstehenden Vorsprung aufweist, der in eine radiale Vertiefung auf der radial inneren Seite der Halteplatte passend eingreift. Durch das Zusammenwirken dieses Vorsprungs und der Vertiefung wird für eine zusätzliche Verdrehsicherung des Verschleißrings in der Halteplatte gesorgt.

Sodann sollte zwischen dem den Verschleißring übergreifenden Teil der Halteplatte und dem Verschleißring ein axiales Spiel vorgesehen sein. Dieses Spiel ermöglicht eine thermische Dehnung des Verschleißrings in axialer Richtung wegen der unterschiedlichen thermischen Dehnungskoeffizienten von Metall und Kunststoff und verhindert eine axiale Belastuntg des Verschleißrings durch die Halteplatte. Der Verschleißring wird daher spannungsfrei gehalten.

Die Erfindung und ihre Weiterbildungen werden nachstehend anhand der Zeichnungen eines bevorzugten Ausführungsbeispiels näher beschrieben. Es zeigen:
Fig. 1 eine Explosionsdarstellung eines Teils einer erfindungsgemäßen Sattelkupplungsplatte mit einem Verschleißring und einer Halteplatte,
Fig. 2 eine Draufsicht auf die Halteplatte,
Fig. 3 eine Draufsicht auf den Verschleißring,
Fig. 4 eine Seitenansicht des Verschleißrings,
Fig. 5 eine Draufsicht auf die Sattelkupplungsplatte im Bereich ihres Einführungsschlitzes ohne den Verschleißring und die Halteplatte,
Fig. 6 den Schnitt VI-VI der Fig. 5,
Fig. 7 eine Draufsicht auf die Sattelkupplungsplatte mit Verschleißring und Halteplatte im zusammengebauten Zustand und
Fig. 8 den Schnitt VIII-VIII der Fig. 7.

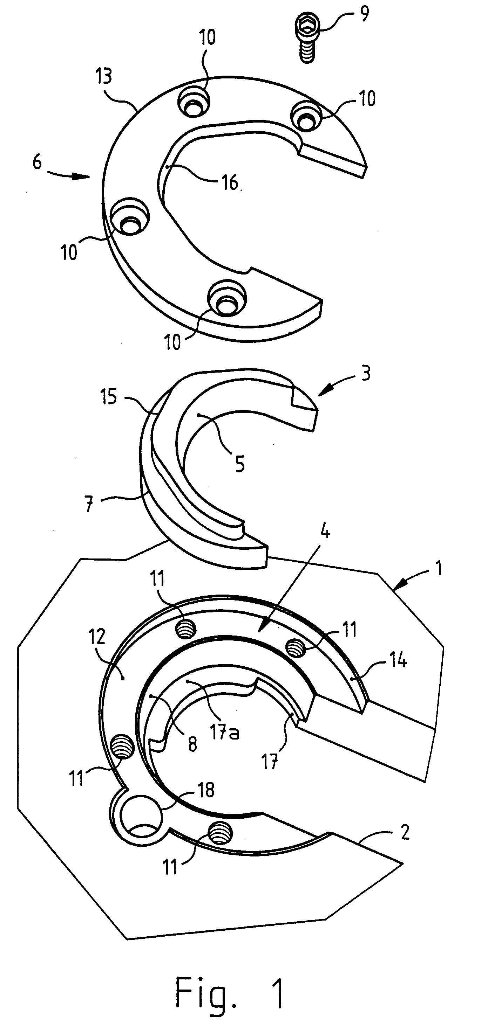

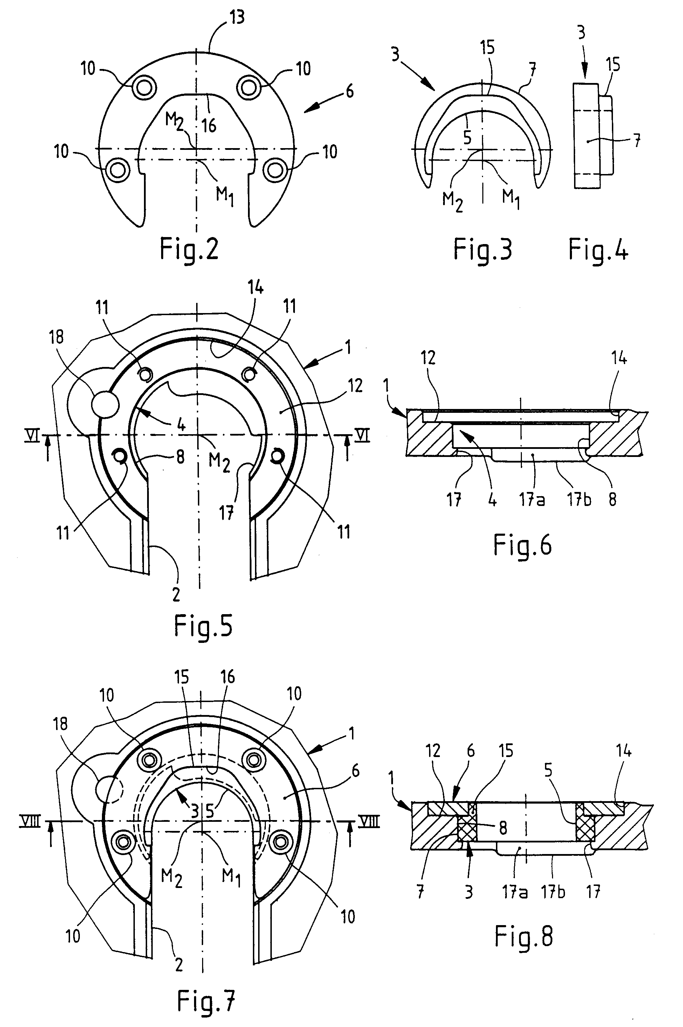

Die in den Fig. 1 sowie 5 bis 8 dargestellte Sattelkupplungsplatte 1 stellt einen Teil einer Sattelkupplung auf einem Sattelzugfahrzeug dar. Die Sattelkupplungsplatte 1 hat einen Einführungsschlitz 2 für einen an einem Sattelanhänger befestigten (nicht dargestellten) Zugsattelzapfen (auch "Königszapfen" genannt). Um den Reibungsverschleiß zwischen Sattelkupplungsplatte 1 und Zugsattelzapfen zu verringern, ist die Sattelkupplungsplatte 1 am Ende des Einführungsschlitzes 2 mit einem etwa hufeisenförmigen Verschleißring 3 aus gleitfähigem Kunststoff versehen, der in einer Abstufung 4 des Einführungsschlitzes 2 befestigt ist und radial nach innen über den Rand des Einführungsschlitzes 2 vorsteht, siehe insbesondere Fig. 8. Die radial innere Kontur 5 des Verschleißrings 3 ist wenigstens teilweise halbkreisförmig (Fig. 3 und 7). Der Verschleißring 3 ist nach den Fig. 7 und 8 mittels einer hufeisenförmigen Halteplatte 6 aus Metall, vorzugsweise Stahl, die den Verschleißring 3 teilweise übergreift und radial außerhalb des Verschleißrings 3 an der Sattelkupplungsplatte 1 befestigt ist, in der Abstufung 4 mit axialem Spiel zwischen Halteplatte 6 und Verschleißring 3, das in Fig. 8 schwach erkennbar ist, festgehalten. Dieses Spiel ermöglicht eine thermische Dehnung des Verschleißrings in axialer Richtung wegen der unterschiedlichen thermischen Dehnungskoeffizienten von Metall und Kunststoff und verhindert eine axiale Belastung des Verschleißrings 3 durch die Halteplatte 6. Der Verschleißring 3 wird daher spannungsfrei gehalten. Die radial äußere Kontur 7 des Verschleißrings 3 und die Kontur der an jener anliegenden Fläche 8 der Abstufung 4 sind kreisbogenförmig, wobei die Kontur 7 und die Fläche 8 den gleichen Krümmungsmittelpunkt M₂ aufweisen und exzentrisch in bezug auf den Mittelpunkt M₁ der Kontur 5 sind, vgl. insbesondere Fig. 3, 5 und 7. Die äußere Kontur 13 der Halteplatte 6 und eine dieser zugekehrte Fläche 14 der Abstufung 4 sind ebenfalls kreisbogenförmig, wobei ihre Krümmungsmittelpunkte mit dem Krümmungsmittelpunkt M₂ der Abstufung 4 zusammenfallen. Der Durchmesser der Fläche 8 der Abstufung 4 ist größer als der der radial äußeren Kontur 7 des Verschleißrings 3.

Die Halteplatte 6 wird mittels Schrauben 9, von denen nur eine in Fig. 1 dargestellt ist, in der Abstufung 4 befestigt. Die Schrauben 9 werden durch Löcher 10 in der Halteplatte 6 hindurch in Gewindebohrungen 11 in einer horizontalen Fläche 12 der Abstufung 4 eingeführt, wobei der Kopf der Schrauben 9 an einer inneren Abstufung der Löcher 10 anliegt.

Der Verschleißring 3 hat ferner einen axial nach oben vorstehenden Vorsprung 15, der in eine radiale Vertiefung 16 auf der radial inneren Seite der Halteplatte 6 passend eingreift, siehe insbesondere Fig. 1, 2, 3 und 7.

Der Verschleißring 3 stützt sich mit seiner Unterseite auf einem radial nach innen vorstehenden Flansch 17 der Abstufung 4 ab. Wie die Fig. 6 und 8 zeigen, steht der Flansch 17 in einem radial etwas breiteren Bereich 17a mit einem Vorsprung 17b axial nach unten vor, der in eine Ausnehmung auf der Oberseite des einen Schenkels eines etwa U-förmigen Verschlußhakens (siehe z.B. DE 39 30 187 C2) für den in den Einführungsschlitz 2 eingeführten Zugsattelzapfen eingreifen kann, um zu verhindern, daß der üblicherweise am unteren Ende des Zugsattelzapfens vorgesehene Bund in die Ausnehmung des Verschlußhakens eingreift.

Ein Loch 18 in der Sattelkupplungsplatte 1 dient zur Einführung eines Gelenkbolzens für den Verschlußhaken.

Im zusammengebauten Zustand nach den Fig. 7 und 8 ist der Verschleißring 3 lediglich durch die Halteplatte 6 axial festgehalten und aufgrund der Exzentrizität der Kontur 5, deren Krümmungsmittelpunkt M₁ mit der Drehachse des eingekuppelten Zugsattelzapfens zusammenfällt, und der äußeren Kontur 7, die an der den gleichen Krümmungsmittelpunkt M₂ wie die Kontur 7 aufweisenden Fläche 8 der Abstufung 4 anliegt, gegen Drehung gesichert. Eine zusätzliche Drehsicherung ergibt sich durch den Eingriff des Vorsprungs 15 des Verschleißrings 3 in die Vertiefung 16 auf der Innenseite der Halteplatte 6, wobei die radial äußere Kontur des Vorsprungs 15 der radial inneren Kontur der Vertiefung 16 angepaßt ist, d.h. zunächst verlaufen die beiden Konturen kreisförmig um den Mittelpunkt M₁ und dann weiter radial nach außen (Fig. 7).

Aufgrund dieser Art der Befestigung des Verschleißrings 3 unterliegt er praktisch keiner Flächenpressung sowohl in axialer Richtung durch die Halteplatte 6 und den Flansch 17 als auch in Umfangsrichtung auf seiner gesamten radial äußeren Fläche. Er hält daher hohen Klemmkräften der Schrauben 9, die im wesentlichen über die Halteplatte 6 auf die Fläche 12 der Abstufung 4 übertragen werden, und hohen Drehmomenten des Zugsattelzapfens ohne Verformung stand.

## Patentansprüche

1. Sattelkupplungsplatte mit einem Einführungsschlitz (2) für einen Zugsattelzapfen und einem in einer Abstufung (4) des Einführungsschlitzes (2) befestigten, etwa hufeisenförmigen Verschleißring (3) aus relativ zum Zugsattelzapfen gleitfähigem Kunststoff, der radial nach innen über den Rand des Einführungsschlitzes (2) vorsteht und dessen radial innere Kontur (5) wenigstens teilweise halbkreisförmig ist, **dadurch gekennzeichnet**, daß der Verschleißring (3) mittels einer Halteplatte (6) aus Metall, die den Verschleißring (3) teilweise übergreift und radial außerhalb des Verschleißrings (3) an der Sattelkupplungsplatte (1) befestigt ist, in der Abstufung (4) festgehalten ist und die radial äußere Kontur (7) des Verschleißrings (3) sowie die Kontur der an Jener Kontur (7) anliegenden Fläche (8) der Abstufung (4) exzentrisch in bezug auf den Mittelpunkt (M₁) des Halbkreises der radial inneren Kontur (5) des Verschleißrings (3) sind.

2. Sattelkupplungsplatte nach Anspruch 1,
**dadurch gekennzeichnet,**
daß die radial äußere Kontur (7) des Verschleißrings (3) und die Kontur der an jener anliegenden Fläche (8) der Abstufung (4) kreisbogenförmig sind.

3. Sattelkupplungsplatte nach Anspruch 1 oder 2,
**dadurch gekennzeichnet,**
daß die Halteplatte (6) mittels Schrauben in der Abstufung (4) befestigt ist.

4. Sattelkupplungsplatte nach einem der Ansprüche 1 bis 3,
**dadurch gekennzeichnet,**
daß die Halteplatte (6) etwa hufeisenförmig ist.

5. Sattelkupplungsplatte nach einem der Ansprüche 1 bis 4,
**dadurch gekennzeichnet,**
daß der Verschleißring (3) einen axial nach oben vorstehenden Vorsprung (15) aufweist, der in eine radiale Vertiefung (16) auf der radial inneren Seite der Halteplatte (6) passend eingreift.

6. Sattelkupplungsplatte nach einem der Ansprüche 1 bis 5,
**dadurch gekennzeichnet,**
daß sich der Verschleißring (3) auf einem radial nach innen vorstehenden Flansch (17) der Abstufung (4) abstützt, der einen axial nach unten vorstehenden Vorsprung (17b) aufweist.

7. Sattelkupplungsplatte nach einem der Ansprüche 1 bis 6,
**dadurch gekennzeichnet,**
daß zwischen dem den Verschleißring (3) übergreifenden Teil der Halteplatte (6) und dem Verschleißring (3) ein axiales Spiel vorgesehen ist.

## Claims

1. Semitrailer coupling plate with an introduction slot (2) for a traction saddle spigot and an about horseshoe-shaped replaceable ring (3), which is fastened in a stepped portion (4) of the introduction slot (2), is of a synthetic material slidable relative to the traction saddle spigot, projects radially inwards beyond the rim of the introduction slot (2) and the radially inward outline (5) of which is at least partially semicircular, characterised thereby, that the replaceable ring (3) is retained by means of a retaining plate (6) of metal, which partially engages over the replaceable ring (3) and is fastened at the semitrailer coupling plate (1) radially outward of the replaceable ring (3), in the stepped portion (4) and the radially outward outline (7) of the replaceable ring (3) as well as the outline of that surface (8) of the stepped portion (4), which lies against that outline (7), are eccentric with respect to the centre (M₁) of the semicircle of the radially inward outline (5) of the replaceable ring (3).

2. Semitrailer coupling plate according to claim 1, characterised thereby, that the radially outward outline (7) of the replaceable ring (3) and the outline of that surface (8) of the stepped portion (4), which lies against that outline (7), are of circularly arcuate shape.

3. Semitrailer coupling plate according to claim 1 or 2, characterised thereby, that the retaining plate (6) is fastened by means of screws in the stepped portion (4).

4. Semitrailer coupling plate according to one of the claims 1 to 3, characterised thereby, that the retaining plate (6) is about horseshoe-shaped.

5. Semitrailer coupling plate according to one of the claims 1 to 4, characterised thereby, that the replaceable ring (3) displays a projection (15), which protrudes axially upwards and engages with a fit into a radial depression (16) on the radially inward side of the retaining plate (6).

6. Semitrailer coupling plate according to one of the claims 1 to 5, characterised thereby, that the replaceable ring (3) bears on a radially inwardly projecting flange (17), which displays an axially downwardly protruding projection (17b), of the stepped portion (4).

7. Semitrailer coupling plate according to one of the claims 1 to 6, characterised thereby, that an axial play is provided between the replaceable ring (3) and that part of the retaining plate (6), which engages over the replaceable ring (3).

## Revendications

1. Plaque d'attelage à sellette, avec une fente d'introduction (2) pour un pivot d'attelage et une bague d'usure (13) fixée dans un étagement (4) de la fente d'introduction (2) et étant à peu près en forme de fer à cheval, réalisée en une matière synthétique permettant un glissement relatif par rapport au pivot d'attelage faisant saillie vers l'intérieur sur le bord de la fente d'introduction (2) et dont le contour (5) intérieur est au moins partiellement en forme de demi-cercle, caractérisée en ce que la bague (3) est fixée dans l'étagement (4) au moyen d'une plaque de maintien (6) en métal, qui saisit par le dessus partiellement la bague (3) et est fixée sur la plaque d'attelage à sellette (1), à l'extérieur de la bague (3), et le contour (7) extérieur de la bague d'usure (3), ainsi que le contour de la face (8), appuyant sur ce contour (7), de l'étagement (4) sont excentrés par rapport au centre (M₁) du demi-cercle du contour (5) intérieur de la bague d'usure (3).

2. Plaque d'attelage à sellette selon la revendication 1, caractérisée en ce que le contour extérieur (7) de la bague (3) et le contour de la face (8), appuyant sur celle-ci de l'étagement (4) sont en forme d'arc de cercle.

3. Plaque d'attelage à sellette selon la revendication 1 ou 2, caractérisée en ce que la plaque de maintien (6) est fixée dans l'étagement (4) au moyen de vis.

4. Plaque d'attelage à sellette selon l'une des revendications 1 à 3, caractérisée en ce que la plaque de maintien (6) est à peu près en forme de fer à cheval.

5. Plaque d'attelage à sellette selon l'une des revendications 1 à 4, caractérisée en ce que la bague d'usure (3) présente une saillie (15) se projetant axialement vers le haut, s'engageant de façon ajustée dans une cavité (16) radiale, ménagée sur la face radialement intérieure de la plaque de maintien (6).

6. Plaque d'attelage à sellette selon l'une des revendications 1 à 5, caractérisée en ce que la bague d'usure (3) prend appui sur un rebord (17) faisant saillie vers l'intérieur de l'étagement (4), rebord présentant une saillie (17b) se projetant axialement vers le bas.

7. Plaque d'attelage à sellette selon l'une des revendications 1 à 6, caractérisée en ce qu'un jeu axial est prévu entre la partie, saisissant par le dessus la bague d'usure (3), de la plaque de maintien (6) et la bague d'usure (3).
